# EUROPEAN PATENT APPLICATION

(11) **EP 2 385 470 A2**
(43) Date of publication of application: **09.11.2011**
(21) Application number: 11154490.4
(22) Date of filing: 15.02.2011
(51) Int. Cl.: G06F 17/30

(54) **Recording and reproducing apparatus and recording and reproducing method**

(30) Priority: 07.05.2010 JP 2010107488
(71) Applicant: Kabushiki Kaisha Toshiba, Tokyo 105-8001 (JP)
(72) Inventor: Ooi, Shinichi, Tokyo 105-8001 (JP)
(74) Representative: HOFFMANN EITLE

(57) **Abstract**

In one embodiment, a recording and reproducing apparatus includes: a program recording module (117) configured to store a program content broadcasted from a broadcast station, together with program information indicating a content of a program of the program content, in a memory; a program keyword extraction module (118d) configured to extract a string of characters included in the program information of the program content stored in the memory as a program keyword; a manager (111a) configured to manage the program keyword extracted by the program keyword extraction module (118d) in association with identification information to identify the program content from which the program keyword is extracted and appear time in which the program keyword appears in the program content; a Web content obtaining module (118c) configured to access a Web server and obtain a Web content provided from the Web server; a Web keyword extraction module (118e) configured to extract a string of characters included in article item constituting the Web content as a Web keyword; a determination module (118f) configured to compare each the program keywords associated with a same identification information and a same appear time with the Web keywords extracted from a same article item and determine whether a related program related to the article item exists at the appear time of each the program keywords based on a matched keyword; and a display controller (118f) configured to generate reproduction instruction information in which the appear time at which the related program is determined to exist is set to be a reproduction start point of the program content corresponding to the identification information of the appear time and display the generated reproduction instruction information in association with the article item on a display.

## Description

Embodiments described herein relate generally to a recording and reproducing apparatus and a recording and reproducing method.

### BACKGROUND

Conventionally, an information communication terminal such as a Personal Computer (PC) including a Web browser function accesses a Web site on the Internet, and obtains a Web content provided from the Web site, and displays the Web content. A recording and reproducing apparatus and a television apparatus which include the Web browser function and record and reproduce a television program are provided, and it is possible to browse the Web content on a TV screen.

By the way, there is a possibility that among the program contents recorded by the recording and reproducing apparatus, a program content exists referring to a subject and content which the program content and an article item of the Web content have in common. Conventionally, a technique is known in which based on a keyword (word) included in the Web content browsed by a user, the program content including the keyword is provided to the user to support reproduction of the program content.

However, according to the conventional technique, by providing the program content related to the Web content to the user, it is possible to urge the user to reproduce the program content, but a position to start reproducing the program content is unconsidered, and there is room for improvement in convenience of the user.

### SUMMERY

To overcome the problems and achieve the object mentioned above, according to an embodiment, a recording and reproducing apparatus comprises a program recording module, a program keyword extraction module, a manager, a determination module, and a display controller. The program recording module is configured to store a program content broadcasted from a broadcast station, together with program information indicating a content of a program of the program content, in a memory. The program keyword extraction module is configured to extract a string of characters included in the program information of the program content stored in the memory as a program keyword. The manager is configured to manage the program keyword extracted by the program keyword extraction module in association with identification information to identify the program content from which the program keyword is extracted and appear time in which the program keyword appears in the program content. The Web content obtaining module is configured to access a Web server and obtain a Web content provided from the Web server. The Web keyword extraction module is configured to extract a string of characters included in an article item constituting the Web content as a Web keyword. The determination module is configured to compare each the program keywords associated with a same identification information and a same appear time with the Web keywords extracted from the same article item and determine whether a related program related to the article item exists at the appear time of each the program keywords based on a matched keyword. The display controller is configured to generate reproduction instruction information in which the appear time at which the related program is determined to exist is set to be a reproduction start point of the program content corresponding to the identification information of the appear time and display the generated reproduction instruction information in association with the article item on a display.

According to another embodiment of the invention, a recording and reproducing method comprises: storing, by a program recording module, a program content broadcasted from a broadcast station, together with program information indicating a content of a program of the program content, in a memory; first extracting, by a program keyword extraction module, a string of characters included in the program information of the program content stored in the memory as a program keyword; managing, by a manager, the program keyword extracted by the first extracting in association with identification information to identify the program content from which the program keyword is extracted and appear time in which the program keyword appears in the program content; accessing, by a Web content obtaining module, a Web server and obtaining a Web content provided from the Web server; second extracting, by a Web keyword extraction module, a string of characters included in an article item constituting the Web content as a Web keyword; comparing, by a determination module, each the program keywords associated with a same identification information and a same appear time with the Web keywords extracted from the same article item and determining whether a related program related to the article item exists at the appear time of each the program keywords based on a matched keyword; and generating, by a display controller, reproduction instruction information in which the appear time at which the related program is determined to exist is set to be a reproduction start point of the program content corresponding to the identification information of the appear time and displaying the generated reproduction instruction information in association with the article item on a display.

### BRIEF DESCRIPTION OF THE SEVERAL VIEWS OF THE DRAWINGS

A general architecture that implements the various features of the invention will now be described with reference to the drawings. The drawings and the associated descriptions are provided to illustrate embodiments of the invention and not to limit the scope of the invention.

FIG. 1 is an exemplary block diagram of a recording and reproducing apparatus according to a first embodiment;
FIG. 2 is an exemplary block diagram of a tuner module in the first embodiment;
FIG. 3 is an exemplary diagram of a related program table in the first embodiment;
FIG. 4 is an exemplary diagram of a Web content in the first embodiment;
FIG. 5 is an exemplary diagram of the Web content displayed on a TV in the first embodiment;
FIG. 6 is another exemplary diagram of the Web content displayed on the TV in the first embodiment;
FIG. 7 is an exemplary flow chart of related program reproducing processing performed by the recording and reproducing apparatus in the first embodiment;
FIG. 8 is an exemplary diagram of a selection screen in a first modified example in the first embodiment;
FIG. 9 is another exemplary diagram of the selection screen according to a first modified example of the first embodiment;
FIG. 10 is still another exemplary diagram of the selection screen in the first modified example;
FIG. 11 is an exemplary flow chart of the related program reproducing processing performed by the recording and reproducing apparatus in the first modified example;
FIG. 12 is an exemplary diagram of the Web content in a second modified example in the embodiment;
FIG. 13 is an exemplary flow chart of a first description information display processing performed by the recording and reproducing apparatus in the second modified example;
FIG. 14 is an exemplary block diagram of a Web server in a second embodiment;
FIG. 15 is an exemplary diagram of the Web content in the second embodiment;
FIG. 16 is an exemplary diagram of the Web content displayed on the TV in the second embodiment; and
FIG. 17 is an exemplary flow chart of a Web content providing processing performed by the Web server in second embodiment.

### DETAILED DESCRIPTION

Various embodiments will be described hereinafter with reference to the accompanying drawings.

A recording and reproducing apparatus and a recording and reproducing method according to an embodiment will now be explained in detail with reference to the drawings. In the embodiment, a multi channel recording apparatus such as a Hard Disk Drive (HDD) recorder and an HDD + Digital Versatile Disc (DVD) recorder which can record content data of a plurality of programs (contents) of a plurality of channel numbers at the same time and use a program provided by a network service by a server as a video on demand is explained below, but it is not limited thereto. For example, it can be a television receiver including a liquid crystal display and a plasma display and so on which can record the content data of the programs of the channel numbers in the HDD included in the television receiver at the same time.

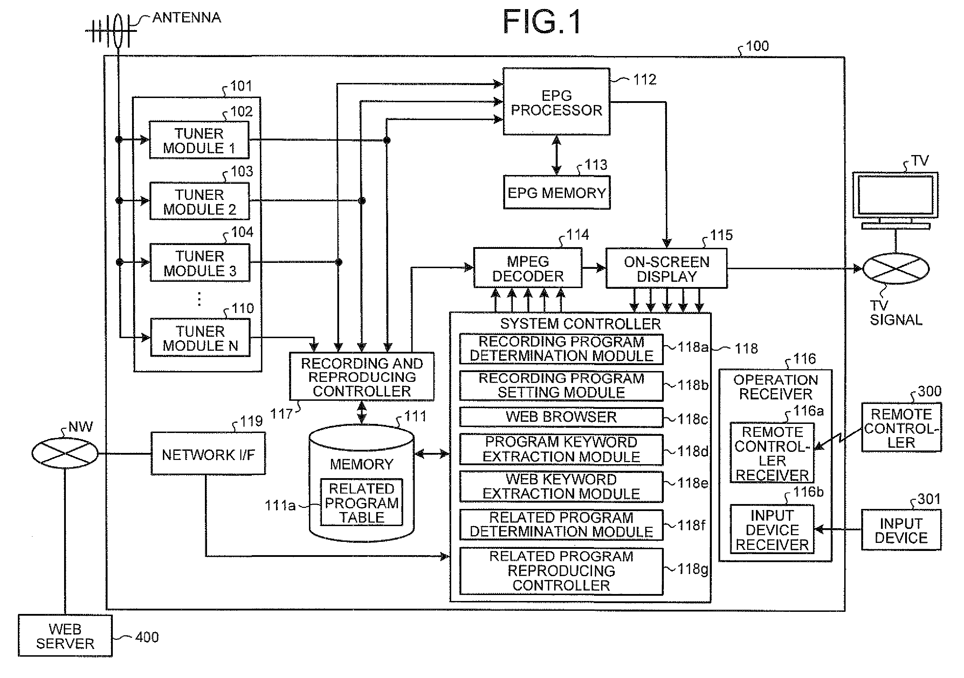

FIG. 1 is a block diagram of a recording and reproducing apparatus 100 according to a first embodiment. As illustrated in FIG. 1, the recording and reproducing apparatus 100 comprises a tuner 101, a memory 111, an Electronic Program Guide (EPG) processor 112, an EPG memory 113, an Moving Picture Experts Group (MPEG) decoder 114, an on-screen display 115, an operation receiver 116, a recording and reproducing controller 117, a system controller 118, and a network I/F 119. If the recording and reproducing apparatus 100 is connected to a communication network NW via the network I/F 119, the recording and reproducing apparatus 100 can use a network service provided by a Web server 400 arranged on the communication network NW.

The Web server 400 provides a Web content, a search service, a variety of services such as delivery of a motion picture. For example, in the service of providing the Web content, in response to an access from an information technology device connected to the Web server 400 via the communication network NW, the Web server 400 performs a network service of providing the Web content including a string of characters and image data. In the search service, in response to a search keyword and a search request output from the information technology device connected to the Web server 400 via the communication network NW, the Web server 400 performs a network service of providing a search result.

The tuner 101 comprises a plurality of tuner modules 102 to 110, and receives transport streams (TS) of a plurality of channel numbers which are obtained by multiplexing content data of programs recorded in the memory 111 such as a HDD at a same time. The transport stream received by the tuner 101 can include One Seg. and Full Seg. In the embodiment, the tuner 101 comprises the tuner modules 102 to 110 which receive data of N channel numbers from Ch 1 to Ch N. The transport streams from Ch 1 to ch N output from the tuner modules 102 to 110 are transmitted to the EPG processor 112 and the recording and reproducing controller 117.

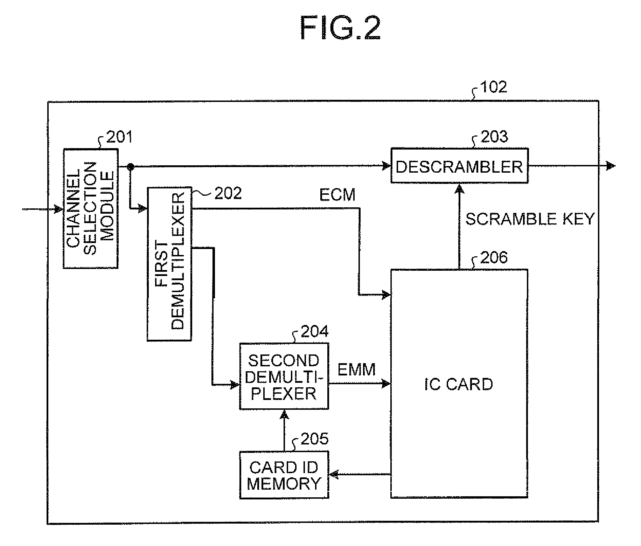

Configurations of the tuner modules 102 to 110 are explained in detail with reference to FIG. 2. FIG. 2 is a block diagram of the tuner module 102 in the embodiment. The configuration of the tuner module 102 is explained below. The configurations of the other tuner modules 103 to 110 are the same as that of the tuner module 102. As illustrated in FIG. 2, the tuner module 102 comprises a channel selection module 201, a first demultiplexer 202, a descrambler 203, a second demultiplexer 204, a card ID memory 205, and an IC card 206.

First, channel selection of antenna input is performed by the channel selection module 201. The transport stream of the selected channel number is input to the first demultiplexer 202 and the descrambler 203. The first demultiplexer 202 demultiplexes the transport stream to obtain control data Entitlement Control Message (ECM) multiplexed in the transport stream, and inputs the control data ECM to the IC card 206. The second demultiplexer 204 demultiplexes the transport stream to obtain Entitlement Management Message (EMM) for the IC card 206 used for the receiver from control data EMM multiplexed in the transport stream, and inputs the EMM to the IC card 206. When the EMM for the IC card 206 is obtained by demultiplexing the transport stream, the second demultiplexer 204 demultiplexes the transport stream by using card 10 unique to an IC card which is output from the IC card 206 and is set in the card ID memory 205.

The IC card 206 uses the input control data ECM and the input control data EMM to decode a scramble key. The descrambler 203 uses the scramble key decoded by the IC card 206 to descramble content data multiplexed in the transport stream, and outputs the content data. In the embodiment, the 1C card 206 is included in each of the tuner modules 102 to 110, but it is not limited to. In stead of this, a single IC card can be shared by the tuner modules.

Referring back to FIG. 1., the memory 111 is a memory medium such as the HDD. The content data to be recorded is stored in the memory 111 under control of the recording and reproducing controller 11'7. The content data to be recorded and the content data recorded are referred to as a program content. If caption information in which the content of a program is recorded in chronological order is multiplexed in the transport stream, the caption information is stored as the program content together with the content data.

The memory 111 stores a related program table 111a into which a program keyword described later extracted from each the program content is stored.

The EPG processor 112 extracts EPG information which is PSI/SI (program specific information/service information) indicating a program of each period of time of each channel number from the transport streams of Ch 1 to Ch N output from the tuner modules 102 to 110 to store in the EPG memory 113. The EPG information includes information unique to each program such as a program name of the program, broadcast date and time, a channels number, and a content of the program.

In the embodiment, an example in which the like a terrestrial digital broadcasting in Japan, the EPG information of the channel number Ch1 to Ch N is extracted from the transport streams of the Ch 1 to Ch N, respectively is explained, but it is not limited to. For example, like a Broadcasting Satellite (BS) digital broadcasting, the EPG information of all the channel number of the BS can be multiplexed into each the channel number.

The EPG processor 112 obtains the EPG information stored in the EPG memory 113 based on a press operation of a program table button included in a remote controller 300 and so on, and supplies program table data indicating a program table in which the obtained EPG information is arrayed in chronological order for each the channel number to the on-screen display 115 to display the program table on a TV. In order to update the EPG information stored in the EPG memory 113 constantly, the EPG processor 112 extracts the EPG information from the transport streams of the Ch 1 to Ch N, and update the EPG information stored in the EPG memory 113 based on the extracted EPG information.

The MPEG decoder 114 decodes the MPEG 2 signal of the program content output from the recording and reproducing controller 117 to input to the on-screen display 115.

The on-screen display 115 supplies the program table data supplied from the EPG processor 112, the program content input from the MPEG decoder 114, a Web content supplied from a Web browser 118c described later, and so on as a television signal (TV signal) to the TV. Thus, the TV can display the program table data, the program content, and the Web content.

The operation receiver 116 comprises a remote controller receiver 116a which receives a signal transmitted with infrared rays and so on from the remote controller 300, and an input device receiver 116b which receives a signal transmitted with wired/wireless communication from an input device 301 such as a pointing device and a keyboard. The remote controller 300 receives an operation from a user, and transmits a signal corresponding to the operation with infrared rays or wireless communication. The input device 301 receives an operation from a user, and transmits a signal corresponding to the operation with wired/wireless communication. That is to say, the recording and reproducing apparatus 100 receives an operation from a user through the remote controller 300 and the input device 301.

The recording and reproducing controller 117 performs predetermined processing on the content data multiplexed into the transport streams of the Ch 1 to Ch N. In the embodiment, the recording and reproducing controller 117 selects the content data which is multiplexed into the transport streams received from the tuner modules 102 to 110, or the program content recorded in the memory 111 based on a control signal from the system controller 118, and performs reproduction processing on the selected data to output to the MPEG decoder 114.

The recording and reproducing controller 117 performs recording processing on the content data to be recorded from the transport stream into the memory 111. The recording processing performed by the recording and reproducing controller 117 is performed according to a control signal for recording.

The system controller 118 controls all the processing in the recording and reproducing apparatus 100. Specifically, the system controller 118 is a control circuit including a micro controller, a Central Processing Unit (CPU), a Read Only Memory (ROM), a Random Access Memory (RAM), and so on.

The micro controller or the CPU of the system controller 118 loads a program stored in the ROM and so on into the RAM to execute the program sequentially. Thus, the system controller 118 performs a processing to output the control signal to the recording and reproducing controller 117 and a variety of processing to reproduce a related program described later.

The system controller 118 executes the above described program, and thereby provides functions of a recording program determination module 118a, a recording program setting module 118b, the Web browser 118c, a program keyword extraction module 116d, a Web keyword extraction module 118e, a related program determination module 118f, and a related program reproducing controller 118g.

The recording program determination module 118a determines whether each the program of the channel numbers received by the tuner 101 is recorded in the memory 111 based on the EPG information stored in the EPG memory 113 and program information (a broadcast date and the channel number) of a program to be recorded set through the remote controller 300 or the input device 301. The recording program setting module 118b sets a program to be recorded in the memory 111 by the recording and reproducing controller 117 based on a determination result by the recording program determination module 118a. The system controller 118 outputs the control signal for recording to the recording and reproducing controller 117 based on a setting result of the recording program setting module 118b.

The Web browser 118c accesses a Web site (the Web server 400) indicated by a user's operation through the network I/F 119, and supplies a Web content supplied from the Web server 400 to the on-screen display 115 to display on the TV. The Web browser 118c cooperates with the related program determination module 118f to display reproduction instruction information described later together with the Web content.

Every time a new program content is stormed in the memory 111, the program keyword extraction module 118d analyzes the EPG information and caption information (hereinafter the EPG information and the caption information are collectively called program unique information) of the program content, and extracts a string of characters such as a word and a morpheme included in the program unique information as the program keyword. The program keyword extraction module 118d stores the extracted program keyword into the related program table 111a held in the memory 111 in association with appear time in which the program keyword appears in the program content and the broadcast date and the channel number in which the program content is broadcasted.

Here, the appear time means time in which the program keyword appears in the program content. For example, some of the program keywords have different appear times from each other in a same program content because a caption's content (the string of characters) is set to be varied depending on reproduction time (broadcast time) in the caption information. The program keyword extracted from the string of characters (for example, a title of a program) with respect to all of the program content in which an appear timing is not set is stored in association with a reproduction start position (a broadcast start position) as the appear time. The appear time can be set according to the broadcast time when the program content is actually broadcasted, and set as a time elapsed from a beginning position of the program content as zero.

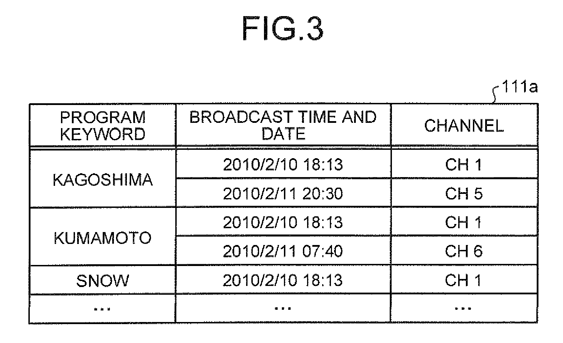

FIG. 3 is a diagram of the related program table 111a in the embodiment. As illustrated in FIG. FIG. 3, the related program table 111a manages the program keyword in association with the broadcast date, the appear time, and the channel number of the program content from which the program keyword is extracted. In FIG. 3, the appear time of the program keyword is indicated as the broadcast time when the program content of the program keyword is actually broadcasted. In FIG. 3, a broadcast time and date is illustrated to include the appear time and the broadcast date, and each the program content can be identified by the broadcast time and date and the channel number. That is to say, in the embodiment, the broadcast time and date and the channel number function as identification information to identify each the program content.

The related program table 111a illustrated in FIG. 3 indicates that the program keyword "KAGOSHIMA" is extracted from the program unique information of a program (the program content) which is broadcasted on Channel 1 at 18:13 on February tenth, 2010 and the program unique information of the program content which is broadcasted on Channel 5 at 20:30 on February eleventh, 2010. Also, the related program table 111a indicates that the program keyword "KUMAMOTO" is extracted from the program unique information of the program content which is broadcasted on Channel 1 at 18:13 on February tenth, 2010 and the program unique information of the program content which is broadcasted on Channel 6 at 07:40 on February eleventh, 2010. Further, the related program table 111a indicates that the program keyword "SEKISETSU" is extracted from the program unique information of the program content which is broadcasted on Channel 1 at 18:13 on February tenth, 2010.

Referring back to FIG. 1, the Web keyword extraction module 118e analyzes the Web content provided by the Web server 400, and extracts the string of characters such as the word and the morpheme as a Web keyword from article items included in the Web content. Here, "the article item" means anything expressed in a language, and includes a news item. If another Web content is linked to the article item, the Web keyword can be extracted from the linked Web content.

Specifically, if a specific article item is selected among the article items constituting the Web content provided from the Web server 400 through the remote controller 300 and the input device 301, the Web keyword extraction module 118e extracts the Web keyword from the selected article items.

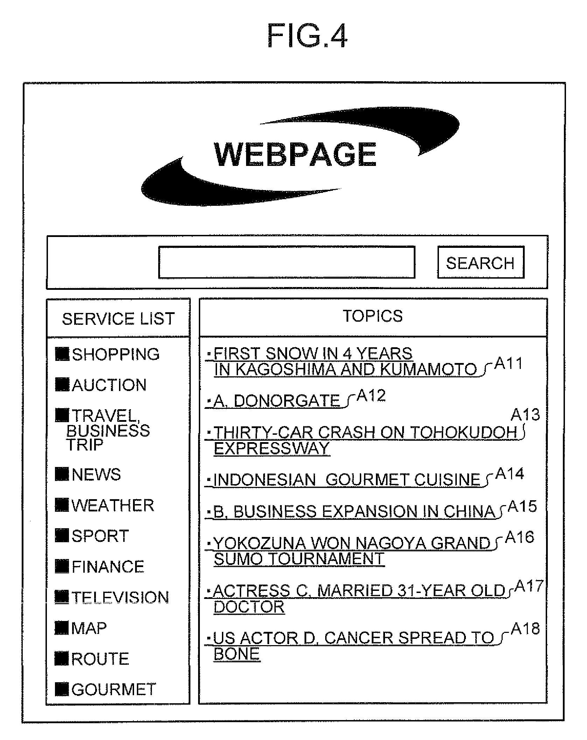

FIG. 4 is a diagram of the Web content in the embodiment. The Web content illustrated in FIG. 4 includes the article items A11 to A18. In FIG. 4, for example, if the article item A11 (the first snow in 4 years in KAGOSHIMA and KUMAMOTO) is selected through the remote controller 300 and the input device 301, the Web keyword extraction module 118e extract the string of characters such as "KAGOSHIMA, " "KUMAMOTO, " "snow, " "the first in 4 years" as the Web keyword from the article item A11. If a page indicating a detail content of the article item All is linked to the article item A11, the Web keyword can be extracted from the detail content of the linked page.

Referring back to FIG. 1, the related program determination module 118f refers to the related program table 111a, and compares the program keywords extracted based on the same channel number and the same broadcast time and date (the broadcast date and the appear time) with the Web keywords extracted from the same article item, respectively. The related program determination module 118f determines whether the content of the program related to or referred to the article item exists at the broadcast time and date of each of the program keywords based on a matched keyword as the comparison result. Hereinafter, the content of the program referred to the specific article item is referred to "the related program."

Various method can be used in order to determine whether the related program exists. For example, the following three determination methods can be used.

As a first determination method, the program keywords extracted based on the same channel number and the same broadcast time and date are compared with the Web keywords extracted from the same article item, respectively, and if a number (rate) of the program keywords which match the Web keywords is more than a predetermined value as the comparison result, the related program is determined to exist at the broadcast time and date of the program keywords. According to the first determination method, if, for example, the Web keywords ("KAGOSHIMA," "FCUMAMOTO," "snow," "the first in 4 years") extracted from the article item A11 of FIG. 4 are compared with the program keywords of each the program content illustrated in FIG. 3 and the number of the matched keywords is set to be three, in the program content broadcasted on Channel 1 at February tenth, 2010, three program keywords of "KAGOSHIMA," "KUMAMOTO," and "snow" match the Web keywords. Therefore, the related program determination module 118f determines that the program content broadcasted on Channel 1 at 18:13 on February tenth, 2010 is the related program.

In a second determination method, a user can assign each the Web keyword with different weight (level of importance). If the Web keyword with the weight of more than a predetermined value is included in the program keyword extracted based on the same channel number and the same broadcast time and date, the related program is determined to exist at the broadcast time and date of the program keyword. According to the second determination method, if, for example, each of "KAGOSHIMA" and "snow" is set to be the Web keyword with the weight of more than the predetermined value among the Web keywords ("KAGOSHIMA," "KUMAMOTO," "snow, " "the first in 4 years") extracted from the article item A11 of FIG. 4, the related program determination module 118f determines that the program content broadcasted on Channel 1 at 18:13 on February tenth, 2010 and the program content broadcasted on Channel 5 at 20:30 on February eleventh, 2010 among the program contents illustrated in FIG. 3 are the related programs.

In a third determination method, a user can assign each the Web keyword with different weight (level of importance) . The program keywords extracted based on the same channel number and the same broadcast time and date are compared with the Web keywords extracted from the same article item, respectively, and every time the program keyword matches the Web keyword, the weight of the matched keyword is added up. If a total of the weights is more than a predetermined value, the related program is determined to exist at the broadcast time and date of the program keyword with the total of the weights of more than a predetermined value. According to the third determination method, if, for example, the weights of the Web keywords ("KAGOSHIMA," "KUMAMOTO," "snow," "the first in 4 years") extracted from the article item A11 of FIG. 4 are set to be "5", "5", "10", "3", respectively, and the predetermined value of the total of the weights is set to be "15", the related program determination module 118f determines that the program content broadcasted on Channel 1 at 18:13 on February tenth, 2010 in which the total of the weights is "15" among the program contents illustrated in FIG. 3 is the related program.

The related program determination module 118f generates the reproduction instruction information in which the appear time of the broadcast time and date at which the related program is determined to exist is set to be a reproduction start point of the program content specified by the broadcast time and date and the channel number. If a plurality of the appear times of the determined related program exist in the same program content, the reproduction start point is set to each of the appear times. In cooperation with the Web browser 118c, the related program determination module 118f displays the generated reproduction instruction information on the TV in forms such as a menu article item and a selection button, together with the Web content.

In the embodiment, if the related program determination module 118f determines that a plurality of the related programs (the appear times) exist regardless of identification of the program content, the related program determination module 118f selects any one of the related programs (the appear times) to select a single reproduction start point. Any selection method of the reproduction start point can be used. For example, a degree of association is calculated based on a number (a rate) of matching with respect to the Web keyword and the total of the weights, the broadcast time and date (the appear time) of the program keyword which is determined to have the highest degree of association can be selected as the single reproduction start point. Alternatively, the oldest (or the newest) broadcast time and date can be selected as the single reproduction start point, or the single reproduction start point can be selected at random.

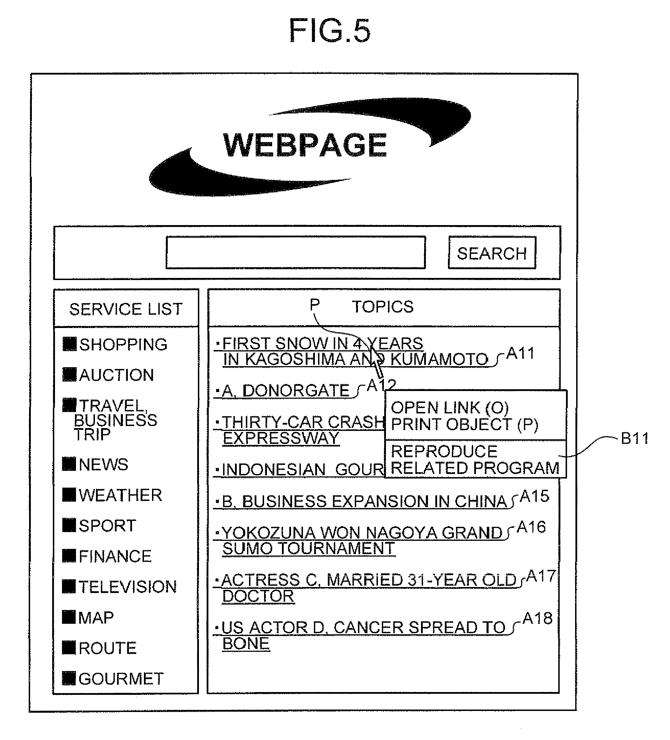

FIG. 5 is a diagram of the Web content displayed on the TV in the embodiment, and corresponds to FIG. 4. In FIG. 5, a pointing device such as a mouse can be used to operate the Web content. As illustrated in FIG. 5, if a pointer P is positioned on a specific article item (the article item A 11), and a display instruction of an operation menu for the specific article item is output by a user (for example, click of a right mouse button), the Web browser 118c displays the reproduction instruction information B11 as an operation menu for instructing a reproduction of the related program of the article item A11 (REPRODUCE RELATED PROGRAM), together with an operation menu for instructing a displaying of a page linked to the article item A11 or a printing. Here, as a display content of the reproduction instruction information B11, day and time information of the reproduction start point and information such as the channel number is not included. However, if the operation to instruct the reproduction of the related program is performed, the reproduction is performed by using day and time information of the reproduction start point set in the reproduction instruction information B11 and so on.

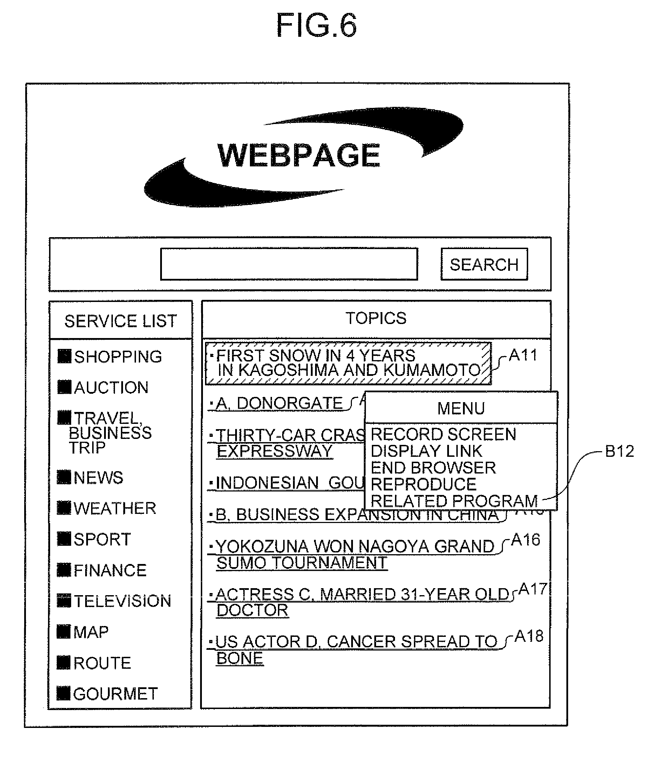

A display configuration of the reproduction instruction information is not limited to the example illustrated in FIG. 5. Instead of this, other display configuration can be used. For example, as an operation method in the Web content, if button (up/down/left/right arrow button, determination button, and so on) provided in the remote controller is used, the display configuration illustrated in FIG. 6 can be used. In the display configuration, a specific article item (the article item A11) is selected by using the up/down/left/right arrow button of the remote controller, and when a press operation is received, the Web browser 118c displays the reproduction instruction information B12 as the operation menu for instructing the reproduction of the related program of the article item A11 (reproduction of the related program), together with an operation menu for instructing a recording (storing) of a display screen, a displaying of a page linked to the article item A11 or a finishing of displaying the Web content. As a display content of the reproduction instruction information B12, day and time information of the reproduction start point and information such as the channel number is not included. However, if the operation to instruct the reproduction of the related program is performed, the reproduction is performed by using day and time information of the reproduction start point set in the reproduction instruction information B12 and so on.

Referring back to FIG. 1, if the reproduction instruction information B11 (FIG. 5) or B12 (FIG. 6) displayed on the TV is selected through the remote controller 300 and the input device 301, the related program reproducing controller 118g outputs the control signal for reproducing the corresponding related program from the reproduction start point set in the reproduction instruction information to the recording and reproducing controller 117. Thus, the related program reproducing controller 118g controls the recording and reproducing controller 117 to start reproducing the related program.

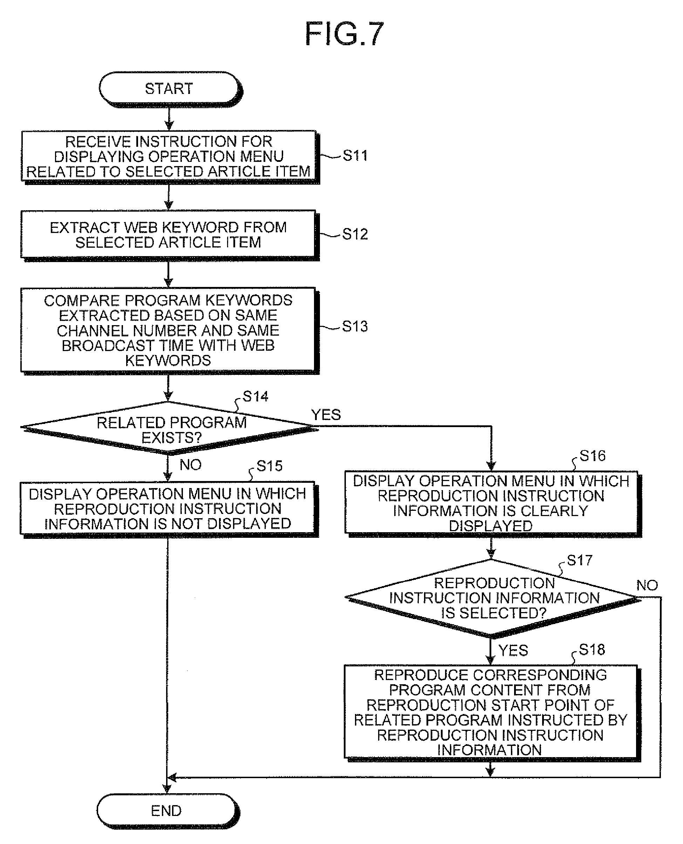

Next, operations until the related program is reproduced in the recording and reproducing apparatus 100 comprising the above mentioned configuration is explained. FIG. 7 is a flow chart of the related program reproducing processing performed by the recording and reproducing apparatus 100 (the system controller 118) in the embodiment. As a precondition, the Web content provided from the Web server 400 is displayed on the TV, and the program keyword extracted from the program keyword extraction module 118d is registered in the related program table 111a.

First, when a specific article item included in the Web content is selected through the remote controller 300 or the input device 301, and the instruction for displaying the menu related to the article item is received by clicking the right mouse button or pressing the determination button, and so on (S11), the Web keyword extraction module 118e extracts the Web keyword from the selected article item (S12).

Next, the related program determination module 118f refers to the related program table 111a, and compares the program keywords extracted based on the same channel number and the same broadcast time with the Web keywords extracted at S12, respectively (S13) . The related program determination module 118f determines whether the related program regarding the selected article item exists based on a matched keyword as the comparison result (S14). If the related program determination module 118f determines that the related program does not exist (No at S14), the related program determination module 118f displays the operation menu in which the reproduction instruction information is not displayed (or displayed in a light color) in cooperation with the Web browser 118c (S15), and then ends the processing.

On the other hand, if the related program determination module 118f determines that the related program exists (Yes at S14), the related program determination module 118f displays the operation menu in which the reproduction instruction information of the related program is clearly displayed as illustrated in FIGS. 5 and 6 in cooperation with the Web browser 118c (S16).

If the reproduction instruction information is selected from the operation menu displayed in S16 (Yes at S17), the related program reproducing controller 118g outputs the control signal for reproducing the corresponding related program from the reproduction start point instructed by the reproduction instruction information to the recording and reproducing controller 117. Thus, the related program reproducing controller 118g controls the recording and reproducing controller 117 to start reproducing the related program (S18), and the ends processing.

If the operation menu other than the reproduction instruction information is selected (No at S17), the system controller 118 ends the processing directly, and performs processing corresponding to the selected operation menu.

As described above, according to the recording and reproducing apparatus 100 in the first embodiment, in the related program table 111a, the program keywords associated with the same channel number and the same broadcast time are compared with the Web keywords extracted from the same article item, respectively. The related program determination module 118f determines whether the related program related to the article item exists at the broadcast time of each of the program keywords based on a matched keyword as the comparison result. The related program determination module 118f generates the reproduction instruction information in which the broadcast time (the appear time) at which the related program related to the article item is determined to exist based on the matched keyword is set to be the reproduction start point of the program content corresponding to the identification information of the appear time. The related program determination module 118f displays the generated reproduction instruction information in association with the selected article item, together with the Web content on the TV. Therefore, when a user who operates the recording and reproducing apparatus 100 in the first embodiment selects the reproduction instruction information through the remote controller 300 or the input device 301, the corresponding program content can be reproduced from the reproduction start point. Thus, it is possible for the user to view the related program (the content of the program) referred to the selected article item, easily.

### (First Modified Example)

In the above mentioned embodiment, a single related program (the broadcast time) with respect to a single article item is set, but, it is not limited to. In stead of this, if the related programs exist, it can be shown that the related programs can be selected so that a user can select the related programs. Hereinafter, this configuration is explained as a first modified example.

In the first modified example, the related program determination module 118f generates the reproduction instruction information in which the appear time of the broadcast time and date of each the program keywords at which the related program is determined to exist is set to be a reproduction start point of the corresponding program content. In cooperation with the Web browser 118c, the related program determination module 118f displays the generated reproduction instruction information on the TV in forms such as the menu article item and the selection button, together with the Web content.

If the related program reproducing controller 118g of the first modified example receives the selection of the reproduction instruction information B11 (FIG. 5) or B12 (FIG. 6) displayed on the TV is selected through the remote controller 300 and the input device 301, the related program reproducing controller 118g determines whether the reproduction start points (the related programs) are included in the reproduction instruction information. If the related program reproducing controller 118g determines the reproduction start points (the related programs) exist, the related program reproducing controller 118g displays a selection screen in which any one of the related programs can be selected on the TV.

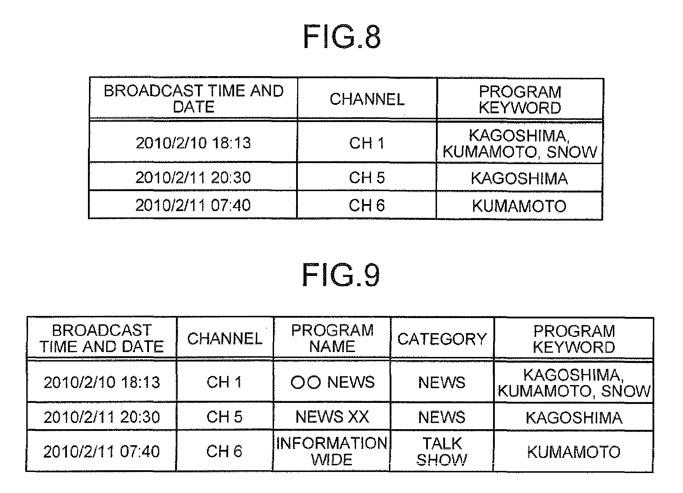

FIG. 8 is a diagram of the selection screen in the first modified example. As illustrated in FIG. 8, as the related programs of the article item (the article item A11 in FIG. 5) specified by a user, three related programs are displayed such that three related programs can be selected. Here, in "the program keyword," the program keyword of each the related programs is displayed. By referring to the program unique information of the related program, other information can be included and displayed in the selection screen. Here, FIG. 9 is another diagram of the selection screen in the first modified example. As illustrated in FIG. 9, "program name" and "category" of each the related programs included in the program unique information (the EPG information) are included and displayed in the selection screen.

Here, "the program keyword" displayed on the selection screen is useful information for a user to select the related program. Therefore, the keyword matched after the program keywords of each the related programs are compared with the Web keywords extracted from the selected article item based on the determination result of whether it is the related program by the related program determination module 118f is controlled to be displayed on the selection screen so that the user can understand a connection between the article item of the related program and the keyword intuitively.

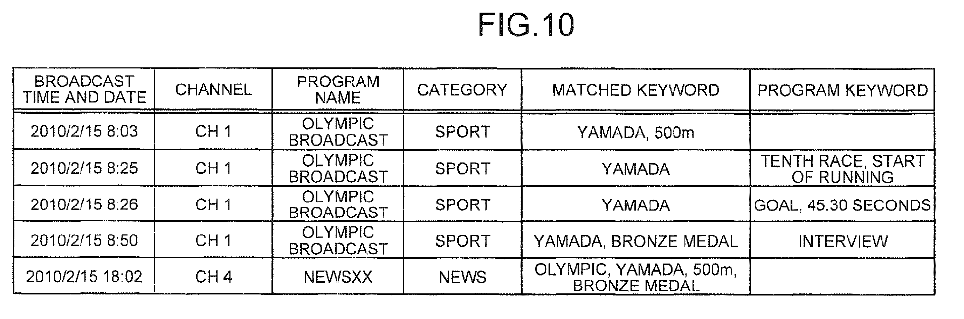

For example, as illustrated in FIG. 10, the keyword matched after the program keywords of each the related programs are compared with the Web keywords extracted from the selected article item (the matched keyword) is displayed separately from the program keyword other than the matched keyword on the selection screen. Thus, it is possible to understand a feature of a program more easily. Here, FIG. 10 is another diagram of the selection screen. As illustrated in FIG. 10, the Web keywords "Olympic, YAMADA, 500 m, bronze medal" are extracted from an article item of the Web content. In this case, the number of keywords of a news program broadcasted on Channel 4 at 18:02 on February fifteenth, 2010 which match the article item is the largest among those of programs illustrated in FIG. 10. However, if the user wants to see a race itself, the user refers to the program keyword other than the matched keyword. Thus, by using the keywords "tenth race, start of running" as a reference the user can understand that the start of running was done near the timing. It can be used as a reference of the reproduction start point when the user sees the race itself.

If the related program reproducing controller 118g receives a selection of the related program to be reproduced from the related programs displayed on the selection screen, the related program reproducing controller 118g outputs the control signal for reproducing the corresponding related program from the reproduction start point set in t the related program to the recording and reproducing controller 117. Thus, the related program reproducing controller 118g controls the recording and reproducing controller 117 to start reproducing the related program.

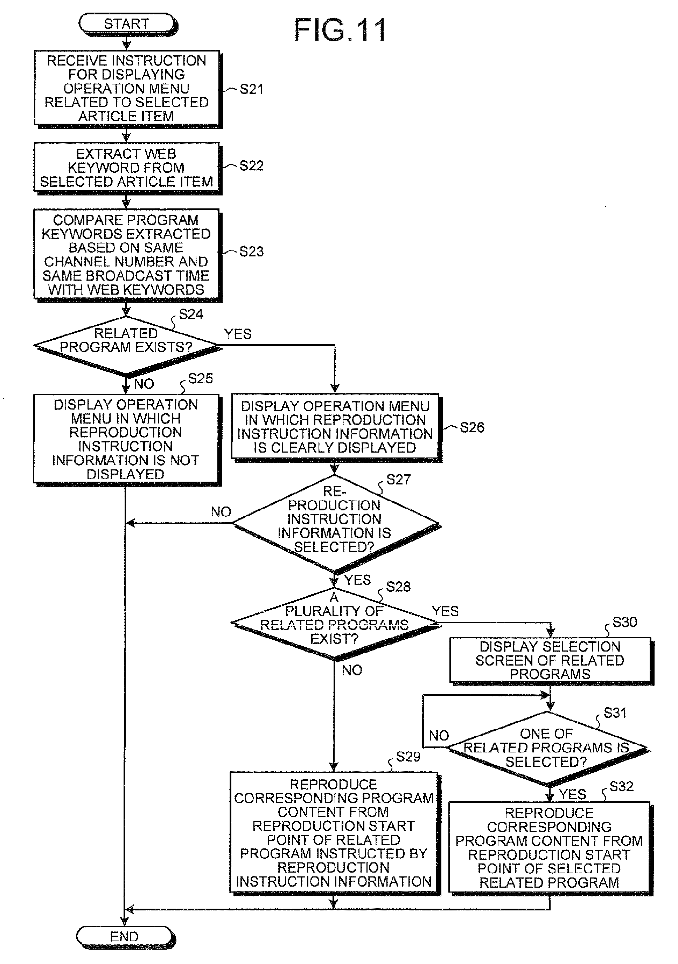

Next, operations until the related program is reproduced in the recording and reproducing apparatus 100 of the first modified example is explained. FIG. 11 is a flow chart of the related program reproducing processing performed by the recording and reproducing apparatus 100 (the system controller 118) in the first modified example. Contents of processing of S 21 to 27 are the same as those of S 11 to 17 of FIG. 7, and therefore their explanations are omitted.

When the reproduction instruction information is selected from the operation menu (Yes at S27), the related program reproducing controller 118g determines whether a plurality of the related programs (the reproduction start points) are included in the reproduction instruction information (S28). If the related program reproducing controller 118g determines that only the single one related program is included in the reproduction instruction information (No at S28), the related program reproducing controller 118g outputs the control signal for reproducing the corresponding program content from the reproduction start point of the related program to the recording and reproducing controller 117. Thus, the related program reproducing controller 118g controls the recording and reproducing controller 117 to start reproducing the related program (S29), and the ends processing.

On the other hand, if the related program reproducing controller 118g determines that the plurality of the related programs are included in the reproduction instruction information (Yes at S28), the related program reproducing controller 118g displays the selection screen of the related programs on the TV (S30), and waits until one of the related programs is selected (No at S31).

When the system controller 118 receives a selection of one of the related programs from the selection screen (Yes at S31), the related program reproducing controller 118g outputs the control signal for reproducing the corresponding program content from the reproduction start point of the selected related program to the recording and reproducing controller 117. Thus, the related program reproducing controller 118g controls the recording and reproducing controller 117 to start reproducing the related program (S32), and the ends processing.

As described above, according to the recording and reproducing apparatus 100 in the first modified example, if the plurality of the related programs (the appear times) are included in the selected reproduction instruction information, the selection screen in which any one of the related programs can be selected is displayed on the TV, and the program content of the related program selected from the selection screen is set to be a target to be reproduced. By doing this, in the case that a plurality of the related programs exist with respect to the selected article item, when a user who operates the recording and reproducing apparatus 100 in the first modified example selects one related program which the user wants to see from the selection screen, the user can start viewing the related program (the content of the program). Thus, it is possible to improve convenience of the user who views the related program (the content of the program).

### (Second Modified Example)

In the above mentioned embodiment, the Web keyword is extracted only from the article item selected by a user from the Web content, but, it is not limited to. In stead of this, the Web keyword can be extracted from the article item other than the article item selected by a user. Hereinafter, this configuration is explained as a second modified example.

In the second modified example, the Web keyword extraction module 118e extracts the Web keyword from all or a part of the article items constituting the Web content. Here, the article item to be extracted can be set arbitrarily. For example, the article item included in a specific area within the Web content can be set as a target to be extracted. The article item written in a specific HTML tag can be set as a target to be extracted. In the second modified example, the Web keyword is extracted from all of the article items constituting the Web content.

The related program determination module 118f refers to the related program table 111a, and compares the program keywords extracted based on the same channel number and the same broadcast time with the Web keywords extracted from the same article item, respectively. The related program determination module 118f determines whether the related program exists with respect to each the article items. The determination method of whether it is the related program used in the second modified example can be any one of the above mentioned first to third determination methods.

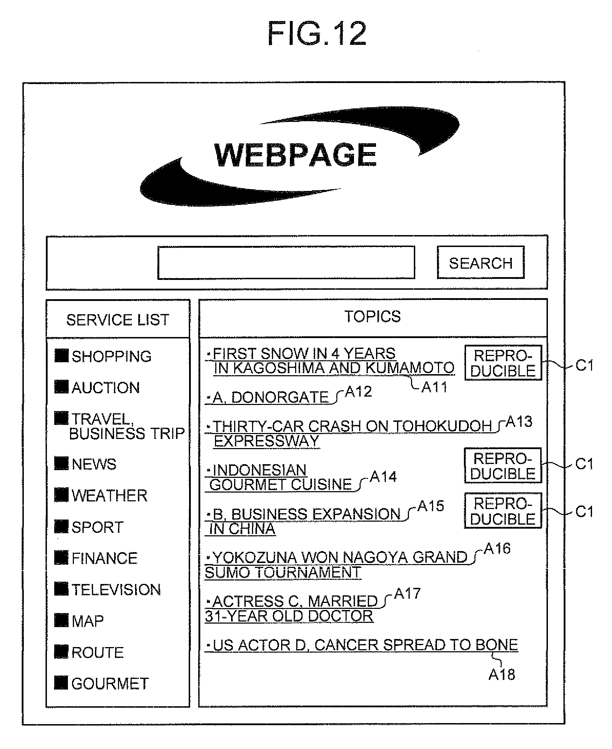

As illustrated in FIG. 12, in cooperation with the Web browser 118c, the related program determination module 118f displays a first description information C1 (the icon image) indicating that the related program can be reproduced in association with the article item which is determined to have the related program. That is to say, in FIG. 12, information other than the first description information C1 is provided from the Web server as the Web content, and the first description information C1 (the icon image) in addition to the Web content is displayed. Here, FIG. 12 is a diagram of the Web content displayed on the TV in the second modified example, and corresponds to FIG. 4.

As just described, the related program determination module 118f in the second modified example displays the first description information C1 in association with the article item which is determined to have the related program of the article items constituting the Web content. Therefore, a user who operates the recording and reproducing apparatus 100 in the second modified example can easily understand which article item has the related program. In this case, regarding reproducing the related program, the same method as one explained by using FIGS. 5 to 11. For example, if a pointer P (a pointing device such as a mouse) is positioned on a specific article item (the article item A 11) in which the first description information C1 is displayed, and the display instruction of the operation menu for the specific article item is output by a user (for example, click of a right mouse button), the reproduction instruction information is displayed and the reproduction of the related program can be instructed from the user.

Alternatively, the first description information can be displayed as the above mentioned reproduction instruction information. In this case, the reproduction start point of the related program of the corresponding article item is set to the icon image as the first description information. When any one of the first description information (the icon images) is selected, the related program determination module 118f can reproduce the related program of the article item corresponding to the icon image from the reproduction start point.

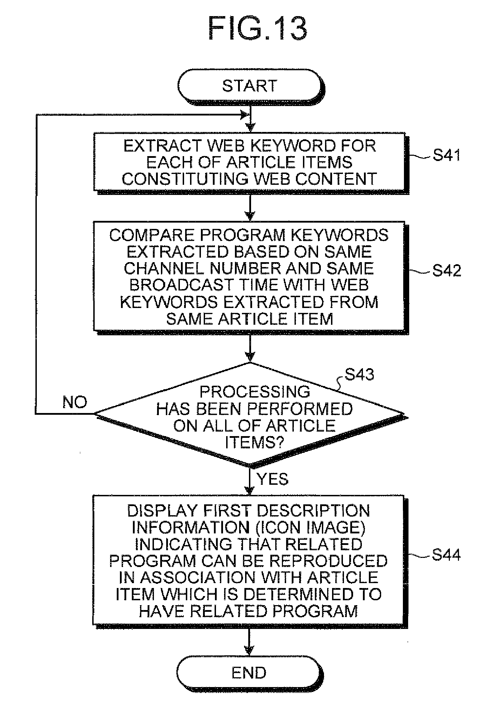

Next, operations until the related program is reproduced in the recording and reproducing apparatus 100 of the second modified example is explained. FIG. 13 is a flow chart of the first description information, display processing performed by the recording and reproducing apparatus 100 (the system controller 118) in the second modified, example. As a precondition, the Web content provided from the Web server 400 is displayed on the TV, and the program keyword extraction module 118d has extracted the program keyword with respect to each content (program) stored in the memory 111.

First, the Web keyword extraction module 118e extracts the Web keyword for each of the article items constituting the Web content (S41). Next, the related program determination module 118f refers to the related program table 111a, and compares the program keywords extracted based on the same channel number and the same broadcast time with the Web keywords extracted from the same article item, respectively, and determines whether the related program regarding the article item exists (S42).

Next, the related program determination module 118f determines whether the processing of S41 and S42 has been performed on all of the article items constituting the Web content, and if the related program determination module 118f determines that the article item on which the processing of S41 and S42 has not been performed exists (No at S43), it returns back to S41, and the Web keyword is extracted from the article item on which the processing of S41 and S42 has not been performed.

On the other hand, if the related program determination module 118f determines that the processing of S41 and S42 has been performed on all of the article items constituting the Web content (Yes at S43), the related program determination module 118f displays the first description information (the icon image) in association with the article item which is determined to have the related program at S42 (S44), and ends the processing.

As described above, according to the recording and reproducing apparatus 100 in the second modified example, the Web keyword from all or a part of the article items constituting the Web content is extracted, and the first description information indicating that the related program can be reproduced is associated with the article item which is determined to have the related program as the determination result of whether the related program exists, and is displayed together with the Web content on the TV. By doing this, when a user who operates the recording and reproducing apparatus 100 in the second modified example refers to the Web content, the user can easily understand which article item has the related program. Thus, it is possible to improve convenience of the user who views the related program (the content of the program).

The second modified example is explained before without referring to the number of the related programs (the broadcast times) with respect to one article item. However, when the reproduction of the related program of the article item which is determined to have the related program is instructed, only one related programs set with respect to one article item can be reproduced. Alternatively, as described in the first modified example, if the plurality of the related programs exist, the plurality of the related programs are shown so that the plurality of the related programs can be selected. Thus, a user can select the plurality of the related programs.

### (Second embodiment)

Next, a recording and reproducing apparatus and a recording and reproducing method according to a second embodiment will now be explained in detail with reference to the drawings. In the second embodiment, the possibility of existing of the related program of each the article item included in the Web content is determined in the Web server side, and the determined possibility of existing is supplied to the recording and reproducing apparatus, together with the Web content. In the second embodiment, the same reference numerals are assigned to the same components of the first embodiment, and explanations of thereof are omitted.

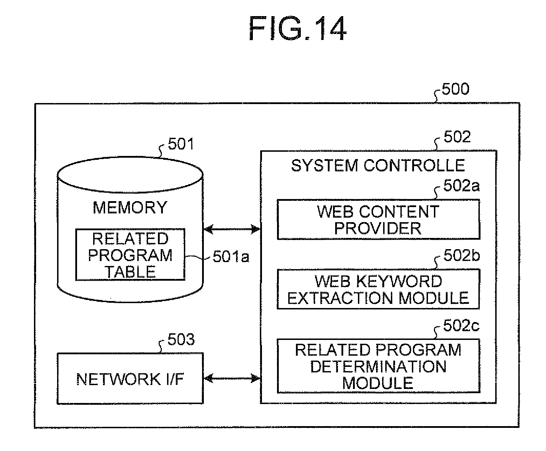

FIG. 14 is a block diagram of a Web server 500 in the second embodiment. As illustrated in FIG. 14, the Web server 500 comprises a memory 501, a system controller 502, and a network I/F 503. If the Web server 500 is connected to the communication network NW through the network I/F 503, the Web server 500 provides the Web content in response to an access from the recording and reproducing apparatus 100 on the communication network NW.

The memory 501 is a recording medium such as a HDD, and stores a variety of programs and setting information for providing the Web content. The memory 501 stores a related program table 501a to store the program keyword extracted from each the program unique information regarding all the program content of all the channel number which the recording and reproducing apparatus 100 can record. Here, the related program table 501a has the same data configuration as that of the related program table 111a described above, and holds the program keyword, and the broadcast time and date, and the channel number which are associated with each other.

The method of obtaining the related program table 501a is not limited to. Any method of obtaining the related program table 501a can be used. For example, as in the first embodiment, the system controller 502 described later can extract the program keyword from the program unique information of each the program content to generate related program table 501a. Alternatively, the related program table 501a itself can be provided from an external device. The program unique information can be provided from an owner of copyright. Alternatively, the Web server 500 includes a tuner, and obtains the program unique information of each the program content uniquely.

The system controller 502 controls the entire operations of the Web server 500. Specifically, the system controller 502 is a control circuit having a micro-controller, a CPU, a ROM, a RAM, and so on.

The micro-controller and the CPU of the system controller 502 load a program stored in the ROM and so on into the RAM to execute the program sequentially to perform an operation to provide the Web content, and so on. The system controller 502 executes the program to perform functions of a Web content provider 502a, a Web keyword extraction module 502b, and a related program determination module 502c.

The Web content provider 502a is a function module to provide (transmit) the Web content to the recording and reproducing apparatus 100 in response to an access from the recording and reproducing apparatus 100. The Web content can be stored in the Web server 500. The Web content can be transferred from another Web server.

The Web keyword extraction module 502b analyzes the Web content to be provided to the recording and reproducing apparatus 100, and extracts the string of characters such as the word and the morpheme from each the article item included in the Web content as the Web keyword. The Web keyword extraction module 502b is the same function module as the Web keyword extraction module 118e described in the first embodiment.

The related program determination module 502c refers to the related program table 501a, and compares the program keywords extracted based on the same channel number and the same broadcast time and date with the Web keywords extracted from the same article item, respectively. The related program determination module 502c determines whether the related program referred to the article item exists. The related program determination module 502c is the same function module as the related program determination module 118f described in the first embodiment, and uses the above mentioned three determination methods and so on.

In cooperation with the Web content provider 502a, the related program determination module 502c adds a second description information (an icon image, for example) indicating that there is a possibility the related program is recorded in the recording and reproducing apparatus 100 in association with the article item of the Web content which is determined to have the related program.

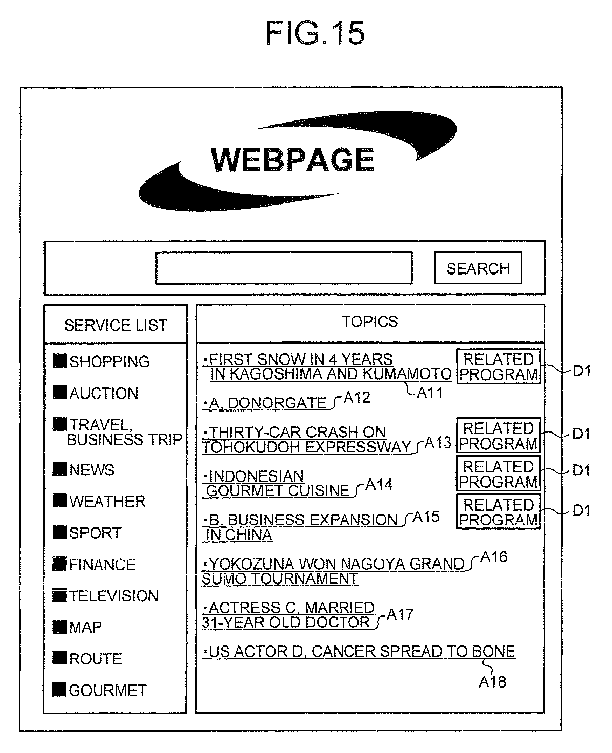

Here, FIG. 15 is a diagram of the Web content provided by the Web server 500 in the second embodiment, and corresponds to the Web content illustrated in FIG. 4. As illustrated in FIG. 15, the second description information D1 indicating that there is a possibility the related program referred to the article item is recorded in the recording and reproducing apparatus 100 is added to the article items A11, A13, A14, and A15 among the article items A11 to A18 constituting the Web content.

On the other hand, the recording and reproducing apparatus 100 receives the Web content, the recording and reproducing apparatus 100 displays the Web content on the TV. Therefore, a user of the recording and reproducing apparatus 100 can realize that there is a possibility that the related program of the article item corresponding to the second description information D1 is recorded in the recording and reproducing apparatus 100 based on the second description information D1 added to the Web content.

As just described, the Web server 500 determines whether the related program exists, and thereby it is possible for a Web service provider side to estimate the related program recorded in the recording and reproducing apparatus 100. Here, the estimation means that there is a case that a determination result of whether the related program exists by the Web server 500 side is different from a determination result of whether the related program exists by the recording and reproducing apparatus 100 side, because only a part of the program contents can be recorded among all the channel numbers and all the program contents which can be received by the recording and reproducing apparatus 100 or a recording period of time can be limited to a only specific period of time by a setting of the recording and reproducing apparatus 100 side. That is to say, that is because if it is not set to receive all the channels which can be received in an area where the receiver is arranged and record all the broadcast time of all the channels by using the tuner modules 102 to 110 which receive the channel numbers of Ch 1 to Ch N in the tuner 101 as illustrated in FIG. 1, the program content which is not recorded in the recording and reproducing apparatus 100 side can exist.

If the Web server 500 in the embodiment is used, the display function of the reproduction instruction information can be disabled in the recording and reproducing apparatus 100 side.

The Web keyword can be extracted and the determination of whether the related program exists can be performed only regarding the article item to which the second description information is added based on the second description information which is added to the Web content. If the determination result of whether the related program exists by the Web server 500 side is different from the determination result of whether the related program exists by the recording and reproducing apparatus 100 side, it is desirable for the related program determination module 118f to disable or delete the second description information, for example, based on the determination result of whether the related program exists by the recording and reproducing apparatus 100.

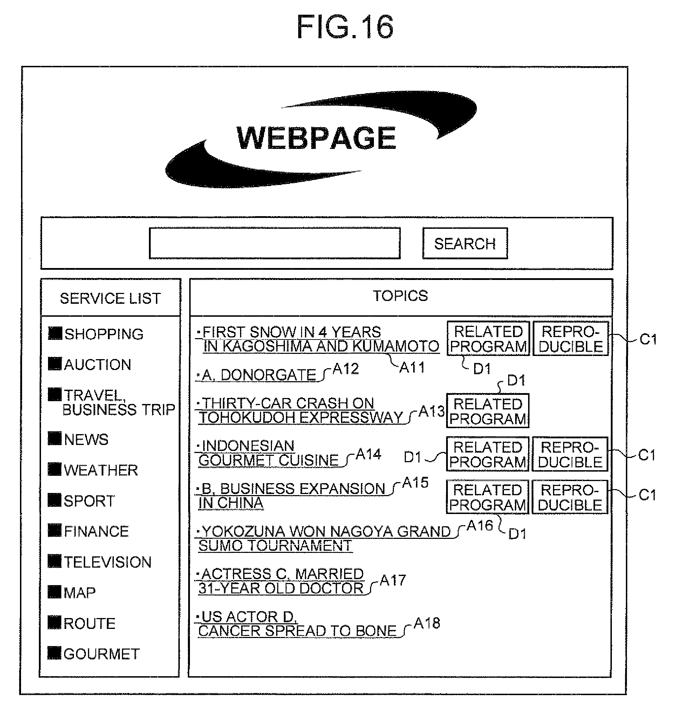

As illustrated in FIG. 16, by using the above mentioned second modified example of the first embodiment in the recording and reproducing apparatus 100, the second description information D1 added by the Web server 500 can be displayed together with the first description information C1. In this case, it is possible to improve convenience of a user because the second description information and the first description information can be displayed in a state that the second description information and the first description information are compared with each other. In this case, the Web keyword is extracted and the determination of whether the related program exists only regarding the article item to which the second description information is added as the second modified example of the first embodiment, and the first description information is displayed with respect to the article item which is determined to have the related program. Therefore have the advantage that there is no need to extract the Web keyword and perform the determination of whether the related program exists regarding all the article items in the recording and reproducing apparatus 100 as the second modified example of the first embodiment.

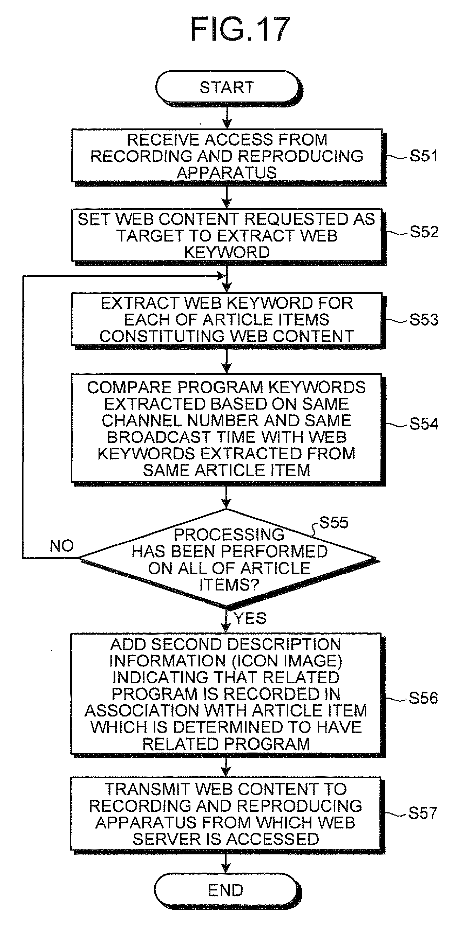

Next, operations until the Web content is provided in the Web server 500 comprising the above mentioned configuration is explained. FIG. 17 is a flow chart of the Web content providing processing performed by the Web server 500 (the system controller 502) in the embodiment. As a precondition, the related program table 501a is stored in the memory 501.

First, when the Web content provider 502a receives the access from the recording and reproducing apparatus 100 through the network I/F 503 (S51), the Web content provider 502a sets the Web content which is requested by the access as the target to extract the Web keyword (S52) . Next, the Web keyword extraction module 118e extracts the Web keyword for each the article item constituting the Web content which is the target to extract the Web keyword (S53).

Next, the related program determination module 502c refers to the related program table 501a, and compares the program keywords extracted based on the same channel number and the same broadcast time with the Web keywords extracted from the same article item at S53, respectively, and determines whether the related program regarding the article item exists (S54).

Next, the related program determination module 502c determines whether the processing of S53 and S54 has been performed on all of the article items constituting the Web content, and if the related program determination module 502c determines that the article item on which the processing of S53 and S54 has not been performed exists (No at S53), it returns back to S53, and the Web keyword is extracted from the article item on which the processing of S53 and S54 has not been performed.

On the other hand, if the related program determination module 502c determines that the processing of S53 and S54 has been performed on all of the article items constituting the Web content (Yes at S55), the related program determination module 502c adds the second description information (the icon image) in association with the article item which is determined to have the related program at S54 (S56).

The Web content provider 502a transmits the Web content on which the processing of S56 is performed to the recording and reproducing apparatus 100 from which the Web server 500 is accessed (S57), and ends the processing.

As described above, according to the recording and reproducing apparatus 100 in the second embodiment, the Web content to which the second description information is added is obtained from the Web server 500, and the Web content is displayed on the TV. By doing this, when refers to the Web content, a user who operates the recording and reproducing apparatus 100 in the second embodiment can easily check that there is a possibility that the related program of the article item constituting the Web content is recorded in the recording and reproducing apparatus 100 based on the second description information.

In the second embodiment, the Web server 500 obtains information (profile) unique to the recording and reproducing apparatus 100 from which the Web server 500 is accessed. Therefore, it is possible to provide the Web content suitable for the recording and reproducing apparatus 100. Specifically, when the recording and reproducing apparatus 100 accesses the Web server 500, the recording and reproducing apparatus 100 provides all or a part of a reception area, a recording setting channel number, a recording period of time to the Web server 500 as the profile from the recording and reproducing apparatus 100. By doing this, it is possible to provide the Web content according to the profile to the recording and reproducing apparatus 100.

For example, the reception area has regional characteristics, and the broadcast time and the channel number (the broadcast frequency) of the same program can vary from a region to region. Therefore, by varying a determination standard of the related program from a region to region, it is possible to obtain a determination result suitable for the reception region at which the recording and reproducing apparatus 100 is arranged.

Moreover, the various modules of the systems described herein can be implemented as software applications, hardware and/or software modules, or components on one or more computers, such as servers. While the various modules are illustrated separately, they may share some or all of the same underlying logic or code.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. A recording and reproducing apparatus comprising:
a program recording module (117) configured to store a program content broadcasted from a broadcast station, together with program information indicating a content of a program of the program content, in a memory;
a program keyword extraction module (118d) configured to extract a string of characters included in the program information of the program content stored in the memory as a program keyword;
a manager (111a) configured to manage the program keyword extracted by the program keyword extraction module (118d) in association with identification information to identify the program content from which the program keyword is extracted and appear time in which the program keyword appears in the program content;
a Web content obtaining module (118c) configured to access a Web server and obtain a Web content provided from the Web server;
a Web keyword extraction module (118e) configured to extract a string of characters included in an article item constituting the Web content as a Web keyword;
a determination module (118f) configured to compare each of the program keywords associated with a same identification information and a same appear time with the Web keywords extracted from a same article item and determine whether a related program related to the article item exists at the appear time of each of the program keywords based on a matched keyword; and
a display controller (118f) configured to generate reproduction instruction information in which the appear time at which the related program is determined to exist is set to be a reproduction start point of the program content corresponding to the identification information of the appear time and display the generated reproduction instruction information in association with the article item on a display.

2. The recording and reproducing apparatus of Claim 1, further comprising:
an operation receiver (116) configured to receive a user's operation; and
a reproducing controller (118g) configured to start reproducing the related program from the appear time, when the operation receiver (116) receives a selection of the reproduction instruction information, based on the selected reproduction instruction information.

3. The recording and reproducing apparatus of Claim 2, wherein when a plurality of the appear times is included in the selected reproduction instruction information, the reproducing controller (118g) displays a selection screen in which one of the appear times can be selected on the display and sets the program content of the appear time selected from the selection screen as a program content to be reproduced.

4. The recording and reproducing apparatus of Claim 3, wherein the reproducing controller (118g) is configured to display the selection screen in which the identification information of the program content corresponding to the appear time included in the reproduction instruction information and the program keywords of the appear time are listed in association with each other on the display.

5. The recording and reproducing apparatus of Claim 3, wherein the reproducing controller (118g) is configured to display the selection screen in which the identification information of the program content corresponding to the appear time included in the reproduction instruction information and a matched keyword matching the Web keywords among the program keywords of the appear time are listed in association with each other on the display.

6. The recording and reproducing apparatus of any one of Claims 2 to 5, wherein the Web keyword extraction module (118e) is configured to extract the Web keyword from the article item of which the operation receiver (116) receives the selection.

7. The recording and reproducing apparatus of any one of Claims 1 to 5, wherein the Web keyword extraction module (118e) is configured to extract the Web keyword from all or a part of the article items constituting the Web content.

8. The recording and reproducing apparatus of Claim 7, wherein the display controller (118f) is configured to associate description information indicating that the related program can be reproduced with the article item determined to have the related program by the determination module (118f) and display the description information together with the Web content on the display.

9. A recording and reproducing method comprising:
storing, by a program recording module (117), a program content broadcasted from a broadcast station, together with program information indicating a content of a program of the program content, in a memory;
first extracting, by a program keyword extraction module (118d), a string of characters included in the program information of the program content stored in the memory as a program keyword;
managing, by a manager (111a), the program keyword extracted by the first extracting in association with identification information to identify the program content from which the program keyword is extracted and appear time in which the program keyword appears in the program content;
accessing, by a Web content obtaining module (118c), a Web server and obtaining a Web content provided from the Web server;
second extracting, by a Web keyword extraction module (118e), a string of characters included in article item constituting the Web content as a Web keyword;
comparing, by a determination module (118f), each the program keywords associated with a same identification information and a same appear time with the Web keywords extracted from a same article item and determining whether a related program related to the article item exists at the appear time of each the program keywords based on a matched keyword; and
generating, by a display controller (118f), reproduction instruction information in which the appear time at which the related program is determined to exist is set to be a reproduction start point of the program content corresponding to the identification information of the appear time and displaying the generated reproduction instruction information in association with the article item on a display.
